# EUROPEAN PATENT SPECIFICATION

(11) **EP 3 148 760 B1**
(45) Date of publication and mention of the grant of the patent: **25.09.2019**
(21) Application number: 15728459.7
(22) Date of filing: 01.06.2015
(51) Int. Cl.: B27M 1/02, F16B 12/14, B23G 5/18

(54) **A METHOD OF FORMING THREADS IN WOOD MATERIAL**
VERFAHREN ZUM GEWINDEFORMEN IN HOLZWERKSTÜCKEN
METHODE DE TARRAUDAGE DANS UN MATERIAU EN BOIS

(30) Priority: 02.06.2014 SE 1450666
(43) Date of publication of application: 05.04.2017
(73) Proprietor: IKEA Supply AG, 4133 Pratteln (CH)
(72) Inventor: ANDERSSON, Fredrik, S-291 95 Färlöv (SE); SJÖSTEDT, Göran, 283 31 Osby (SE); ERIKSSON, Anders, S-343 73 Virestad (SE)
(74) Representative: Ström & Gulliksson AB
(86) International application number: PCT/EP2015/062146
(87) International publication number: WO 2015/185501

(56) References cited:
- WO-A1-2013/102736
- WO-A2-2006/103649
- DE-C1- 19 607 230
- FR-A- 1 349 493
- GB-A- 233 258
- GB-A- 757 709
- JP-A- 2010 036 277
- US-A- 4 606 683
- US-A- 5 678 962
- US-A1- 2008 273 941
- US-A1- 2015 360 303

## Description

### Technical Field

The present invention concerns a method of forming threads in wood material, according to claim 1. A method according to the preamble of claim 1 is known from the document US2008/0273941A1.

### Background

In industrial production of wooden products, for example furniture, it is important that different steps of the production can be performed at a high speed. It is also important that the piece of furniture is easy to assemble, and that it has a high mechanical strength.

The traditional way of making threads in an opening is to use a screw tap. After the screw tap has been screwed down the rotation direction is reversed to get the screw tap out. This is not optimal in high speed production.

### Summary

According to one aspect of the present invention, an inner conical thread is formed in an opening. A stop of the conical threads will be formed due to the conicity.

The method of the present invention is developed for high speed production of furniture. It may be used in connection with legs of tables, chairs, stools, sofas, shelves etc. Normally, the upper part of the leg is provided with an outer thread to be received in a threaded opening.

According to the present invention a milling cutter is used to form the inner threads of the opening. To form conical threads the milling cutter may have a tapering form at the lower end. At said tapered lower end a number of circumferential cutting edges are provided. The tapering is such that the smallest diameter is at the lower tip of the milling cutter.

In operation the milling cutter will rotate around its own central axis. The milling cutter is travelled along the inside of the opening at the same time as it is moved along the opening. Normally, the milling cutter will go one turn around the inner surface of the opening. Thus, the milling cutter will perform a helical movement around the centre axis of the opening at the same time as the milling cutter rotates about its own centre axis. This travel along the inside of the opening by the milling cutter will give threads on the inside of the opening. The inclination of the threads is given by the relationship between the circular movement of the milling cutter around the centre axis of the opening and the movement along the opening for the milling cutter. The inner diameter of the opening is larger than the outer diameter of the milling cutter. The difference in diameter between the opening and the milling cutter should at least be larger than the height of the threads, in order for the milling cutter to be free of the formed threads of the opening when it is to be lifted out of the opening.

For straight threads a straight milling cutter is normally used. Such a straight milling cutter may also be used to form conical threads, in which case the milling cutter is placed inclined inside the opening.

A further possible way to form the conical threads is to use a milling cutter having only one cutting edge, which milling cutter is moved inwards or outwards at the same time as it does a helical movement along and inside an opening.

The milling cutter having one cutting edge will go several turns inside the opening to form the conical thread. In contrast to the above discussed milling cutter having several cutting edges, and which only need to go one turn inside the opening of the opening.

Irrespectively of which type of milling cutter that is used, it will be placed at the centre of the opening after forming the threads. Thereafter the milling cutter is lifted from the opening. Before forming threads using the milling cutter, an opening may be drilled.

According to a further aspect of the present invention a milling cutter is provided, having a lower tapered section with cutting edges.

A furniture part to be received in the opening is given an outer conical thread corresponding with a conical thread of the opening. The outer conical thread may be formed in a conventional way. It is also possible to use the same tapered milling cutter as is used for forming inner threads in an opening as indicated above.

According to a further aspect there is provided at least one first furniture part and at least one second furniture part to form a piece of furniture. The first furniture part comprises an opening provided with a wooden thread and the second furniture part comprises a male part provided with a wooden thread for co-operating with the wooden thread of the first furniture part, wherein at least one of the threads of the opening and the male part is a conical thread.

An advantage of this piece of furniture is that a mechanically strong connection between the first and second furniture parts is obtained. A further advantage is that the at least one conical thread is forgiving with respect to any deviations in the tolerances. A still further advantage is that it is easy to assemble the piece of furniture, since the at least one conical thread easily mates with the other thread.

According to one embodiment both the thread of the opening and the thread of the male part are conical threads. An advantage of this embodiment is that a very high mechanical strength is obtained between the first and the second furniture part.

According to one embodiment the opening of the first furniture part is a through opening. An advantage of this embodiment is that a mechanically strong connection can be obtained also in situations when the opening is formed in a relatively thin piece of material.

According to one embodiment the thread of the through opening extends through the entire through opening. An advantage of this embodiment is that the entire thickness of that portion of the first furniture part, in which the through opening is formed, is threaded and is therefore active in the assembly with the second furniture part. Thereby a particularly strong connection between the first and second furniture parts is achieved also for relatively thin dimensions of that part in which the opening is formed.

Further objects and advantages of the present invention will be obvious to a person skilled in the art when reading the detailed description below of embodiments of the invention.

### Brief Description of the Drawings

The invention will be described further below by way of example and with reference to the enclosed drawings. In the drawings:
Fig. 1 is a perspective view of a milling cutter,
Fig. 2 is a cross section view of the milling cutter of Fig. 1,
Figs. 3 to 10b are perspective and partly cross sections sketches illustrating a number of production steps according to the present invention,
Fig. 11 is a cross section view showing the resulting thread,
Fig. 12 is a perspective view of a furniture part provided with an outer conical thread, and
Fig. 13 shows an example of a piece of furniture produced using the method of the present invention.

### Detailed Description

As used in this description the expressions "lower", "upper" and similar expressions are in view of the Figs. referred to.

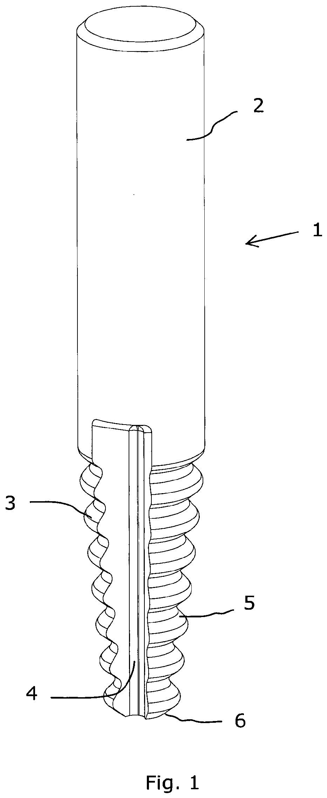

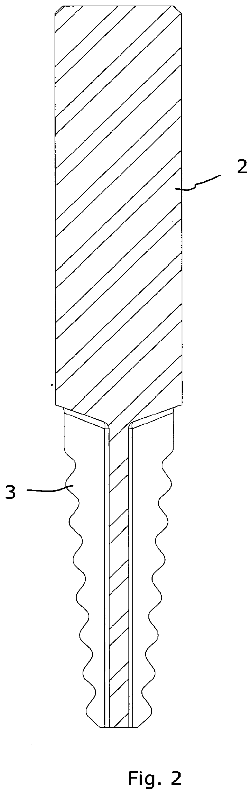

In Figs. 1 and 2 one embodiment of a milling cutter 1 is shown. The milling cutter 1 has an upper shank 2 and a lower part 5 having a number of cutting edges 3. Each cutting edge 3 is placed perpendicular to a longitudinal centre axis of the milling cutter 1. The lower part 5 of the milling cutter 1 having the cutting edges 3 is tapered towards the outer, free end 6. Thus, the outer diameter of the milling cutter 1 is smaller at the outer end 6 than in the area adjacent the shank 2. It could also be expressed that the outer diameter of each cutting edge 3 is smaller than the outer diameter of an adjacent upper cutting edge 3. In the area of the cutting edges 3 the milling cutter 1 has a longitudinal recess 4.

The shank 2 of the milling cutter 3 is to be inserted or fixed in a milling machine.

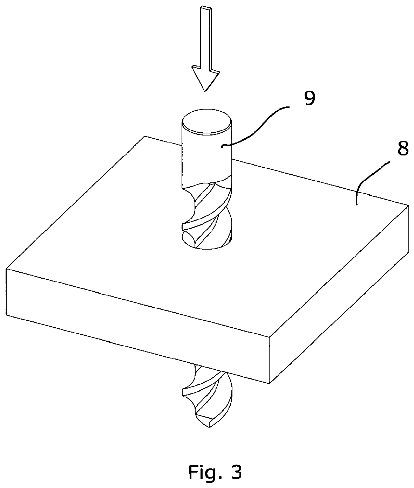

The milling cutter 1 can be used to form threads on an inner surface of an opening. The opening may be a through opening. The threads are formed in a number of steps. In Figs. 3 to 10b the steps in one embodiment of the invention are indicated.

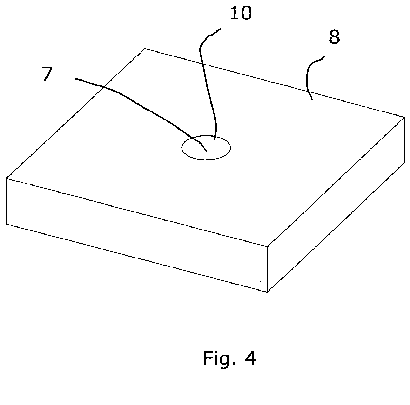

In a first step a through opening 7 is made in a first wooden furniture part 8 by means of a drill 9, as indicated in Fig. 3. Fig. 4 shows the first furniture part 8 when the through opening 7 has been made by the drill 9. The through opening 7 has an inner surface 10. The drilling is made in a normal way.

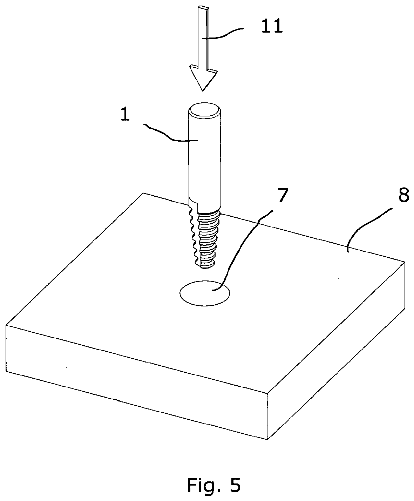

In a second step, which is illustrated in Figs 5-10b, the milling cutter 1 is inserted in the opening 7 of the first furniture part 8, as indicated by an arrow 11.

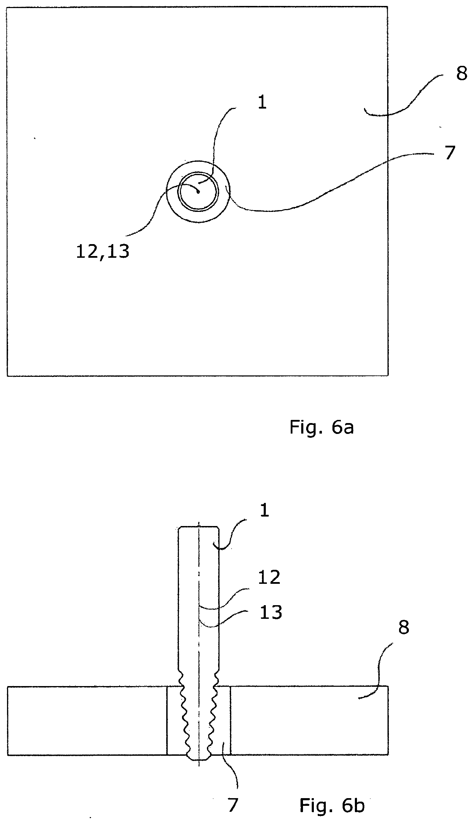

Figs. 6a and 6b show the milling cutter 1 when it has been inserted in the through opening 7 of the first furniture part 8. Fig. 6a is a view from above and Fig. 6b is a view seen from the side and partly in cross section. In Figs. 6a and 6b the milling cutter 1 is arranged in the centre of the opening 7, meaning that a centre axis 12 of the milling cutter 1 coincides with a centre axis 13 of the through opening 7. The milling cutter 1 is inserted so that the free end 6 of the milling cutter 1 is on level with the lower end of the through opening 7. In this position the milling cutter 1 is prepared for starting to cut the thread.

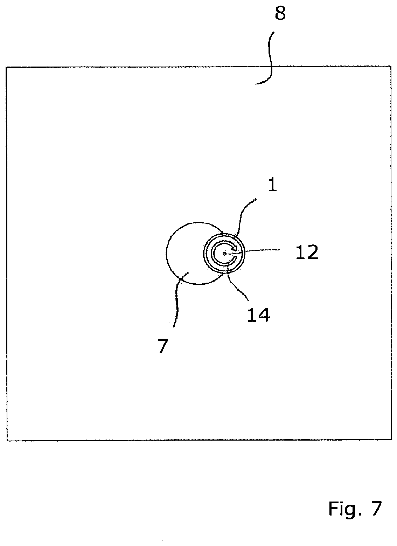

Fig. 7 is a view from above. Fig. 7 shows that the milling cutter 1 has been moved to one side of the opening 7 to start the cutting of a thread in the opening. The milling cutter 1 rotates about its own centre axis 12 with a rotational speed of, for example, 400-4000 rpm, which is illustrated with an arrow 14, to cut the threads in the wall of the opening 7.

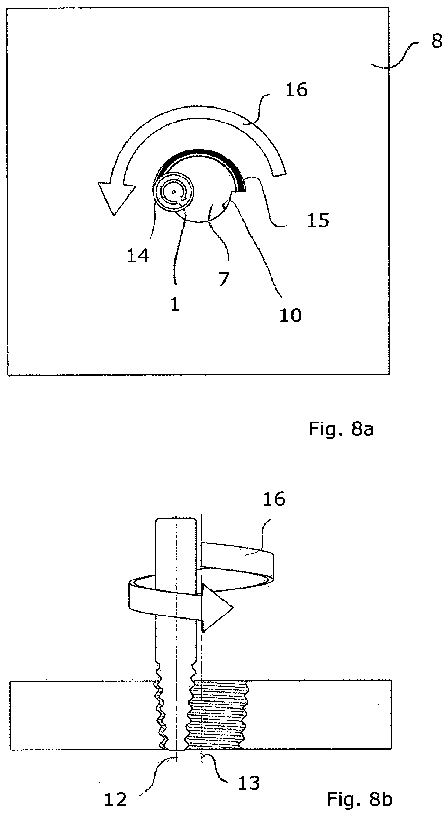

Fig. 8a is a view from above and Fig. 8b is a view seen from the side and partly in cross section. Figs. 8a and 8b show that the milling cutter 1 has moved around half of the inner surface 10 of the through opening 7 and has formed a thread 15 in half of the inner surface 10. As shown the centre axis 12 of the milling cutter 1 is displaced from the centre axis 13 of the opening 7. Fig. 8b shows how the milling cutter 1 moves about the centre axis 13 of the opening 7 and along the opening 7, the milling cutter thereby performing a helical movement about the centre axis 13 of the opening 7, as illustrated by an arrow 16.

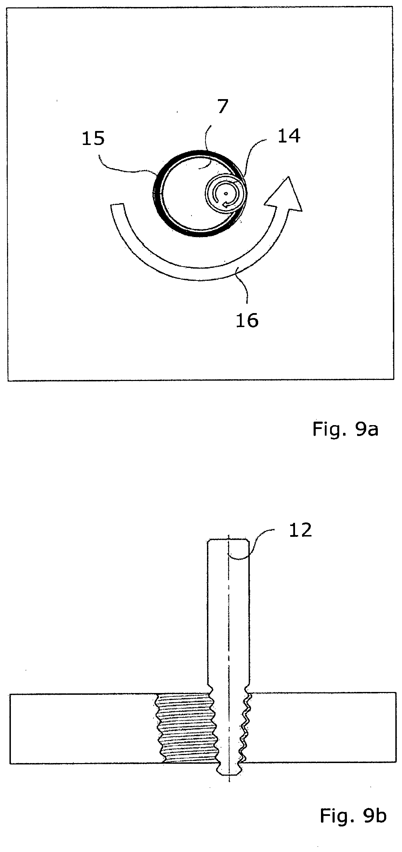

Fig. 9a is a view from above and Fig. 9b is a view seen from the side and partly in cross section. Figs. 9a and 9b show that the milling cutter 1 has moved one full turn inside the opening 7 and has formed a full thread 15 inside the opening 7.

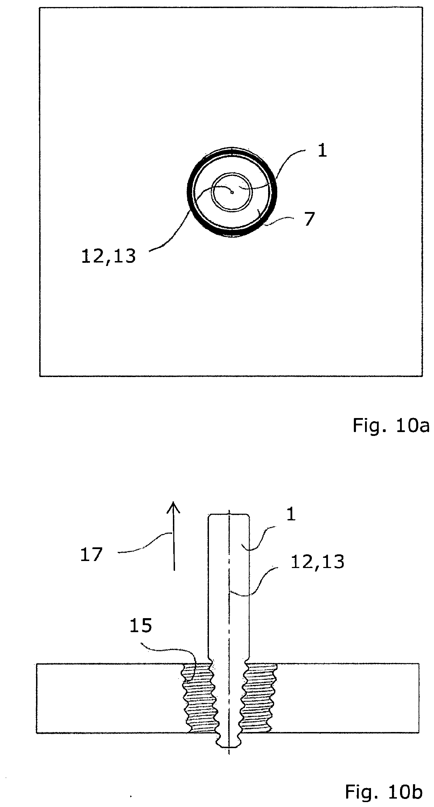

Fig. 10a is a view from above and Fig. 10b is a view seen from the side and partly in cross section. Figs. 10a and 10b show that the milling cutter 1 has been moved to the centre of the opening 7, such that the centre axis 12 of the milling cutter 1 coincides with the centre axis 13 of the opening 7. In order to be able to move the milling cutter 1 out of the through opening 7, the inner diameter of the through opening 7 must be larger than the outer diameter of the milling cutter 1, for the parts of the through opening 7 and milling cutter 1 being at the same level at the end of the movement for the milling cutter 1. The milling cutter 1 is now free, and can be moved out of the opening 7, in the direction of the arrow 17. The thread 19 of the opening is now ready for use.

The length of the longitudinal movement along the through opening 7 for the milling cutter 1, will give the inclination of the conical threads 15 on the inner surface of the through opening 7. Thus, the longer the longitudinal movement of the milling cutter 1 is the steeper will the inclination of the conical threads 15 be.

In the example shown in Figs. 5-10b, the milling cutter 1 is orientated to vertically downwards into the opening 7 of the horizontally orientated furniture part 8. However, in practice the milling cutter 1 and the furniture part 8 may have any orientation.

The above described embodiments may be combined in different ways.

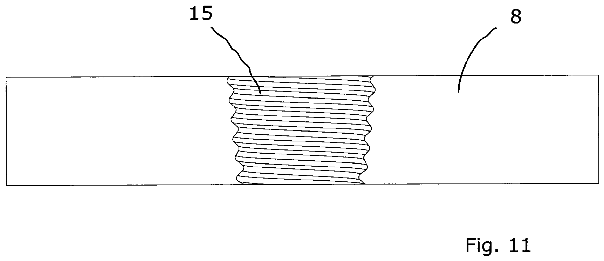

Fig. 11 shows a cross section view of the first furniture part 8, with the conical threads 15 of the through opening 7.

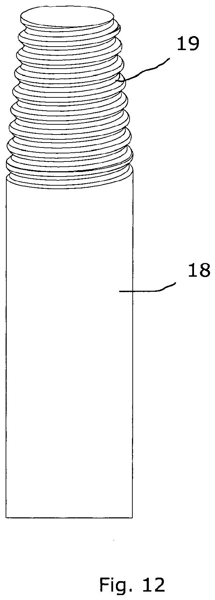

The through opening 7 of the first furniture part 5, is to receive a male part, for example a second furniture part 18 as shown in Fig. 12, having conical threads 19 corresponding with the threads 15 of the through opening 7. The conical threads 19 of the second furniture part 18 may be formed by the same milling cutter 1 as described above. Thus, the milling cutter 1 having a tapered lower section with cutting edges 3 may be used also in this embodiment. To form the outer conical threads 19 on the second furniture part 18 the milling cutter 1 is placed on the second furniture part 18 with the tapered lower section 3 of the milling cutter 1 directed inwardly from an outer free end of the second furniture part 18. The milling cutter 1 is then moved one turn around the second furniture part 18, at the same time as the milling cutter 1 is moved along the second furniture part 18. The movement along the second furniture part 18 for the milling cutter 1 is directed away from the free end of the second furniture part 18. Also in this case the milling cutter 1 will make a helical movement along the second furniture part 18.

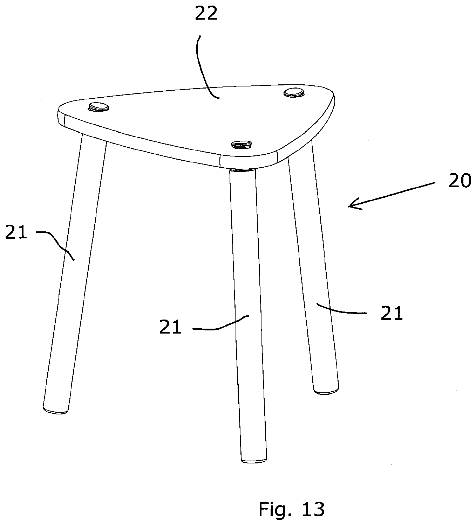

In use one or more parts having an outer thread is screwed into one or more openings of a part having through openings with inner threads. In Fig. 13 a stool 20 is shown having three legs 21. The legs 21 have an outer thread at one end, which is to be received in an inner thread in one of the through openings of a seat 22 of the stool 20. The stool 20 is only shown as one example of using the threads formed according to the present invention. A person skilled in the art realizes that such threads can be used for many different types of furniture. The person skilled in the art also realizes that the number of legs may vary, for pieces of furniture having legs.

The threads formed according to the present invention may be used for fastening wooden parts of any kind. Thus, it is not limited to be used with furniture.

## Claims

1. A method of forming threads (15) in a wooden part (8), wherein a cutter (1) is moved at least one turn along the inner surface (10) of an opening (7) of the wooden part (8) at the same time as the cutter (1) moves longitudinally along the opening (7) and gives the threads a conical shape formed by:
- the shape of the cutter (1), such that the cutter (1) has a number of cutting edges (3) that are perpendicular to a longitudinal centre axis (12) of the milling cutter (1) and that the outer diameter of each cutting edge (3) is smaller than the outer diameter of the cutting edge (3) placed next to it;
and
- moving the milling cutter inwards or outwards in relation to a centre axis (13) of the opening (7), **characterized in that** the cutter is a milling cutter, and **in that** it is given a helical movement.

2. The method of claim 1, wherein the milling cutter (1) is moved towards the centre of the opening (7) after it has finished the movement along the inner surface of the opening (7), and wherein the milling cutter (1) is thereafter moved upwards out of the opening (7).

3. The method of claim 1 or 2, wherein the opening (7) is drilled forming a through opening.

4. The method of any of the previous claims, wherein the milling cutter is moved in an inclined position in relation to the opening (7).

5. The method of any of the previous claims, wherein the milling cutter is moved inwards or outwards in relation to the centre axis (13) of the opening (7) at the same time as it moves along the opening (7).

6. The method of any of the previous claims, wherein a milling cutter (1) having a lower tapered part (5) with cutting edges (3) is used.

7. The method of any of the previous claims, wherein the milling cutter (1) is moved just one turn around the inner surface (10) of the opening (7).

## Patentansprüche

1. Verfahren zum Bilden eines Gewindes (15) in einem Holzteil (8), wobei ein Schneidwerkzeug (1) um mindestens eine Umdrehung entlang der Innenfläche (10) einer Öffnung (7) des Holzteils (8) bewegt wird zur gleichen Zeit wie das Schneidwerkzeug (1) sich in Längsrichtung entlang der Öffnung (7) bewegt und dem Gewinde eine konische Form gibt, gebildet durch:
- die Form des Schneidwerkzeug (1), so dass das Schneidwerkzeug (1) eine Anzahl von Schneidkanten (3) aufweist, die senkrecht zu einer Längsmittelachse (12) des Schneidwerkzeug (1) stehen, und dadurch, dass der Außendurchmesser jeder Schneidkante (3) kleiner ist als der Außendurchmesser der dieser zuwächst angeordneten Schneidkante (3);
und
- Bewegen des Schneidwerkzeug nach innen oder außen in Bezug auf eine Mittelachse (13) der Öffnung (7), **dadurch gekennzeichnet, dass** das Schneidwerkzeug ein Fräser ist und dass diesem eine schraubenförmige Bewegung erteilt wird.

2. Verfahren nach Anspruch 1, wobei der Fräser (1) in Richtung der Mitte der Öffnung (7) bewegt wird, nachdem er die Bewegung entlang der Innenfläche der Öffnung (7) beendet hat, und wobei der Fräser (1) danach nach oben aus der Öffnung (7) bewegt wird.

3. Verfahren nach Anspruch 1 oder 2, wobei die Öffnung (7) gebohrt wird und eine durchgehende Öffnung gebildet wird.

4. Verfahren nach einem der vorhergehenden Ansprüche, wobei der Fräser in einer geneigten Position in Bezug auf die Öffnung (7) bewegt wird.

5. Verfahren nach einem der vorhergehenden Ansprüche, wobei der Fräser in Bezug auf die Mittelachse (13) der Öffnung (7) nach innen oder außen bewegt wird, gleichzeitig mit der Bewegung entlang der Öffnung (7).

6. Verfahren nach einem der vorhergehenden Ansprüche, wobei ein Fräser (1) mit einem unteren konischen Teil (5) mit Schneidkanten (3) verwendet wird.

7. Verfahren nach einem der vorhergehenden Ansprüche, wobei der Fräser (1) nur eine Umdrehung entlang der Innenfläche (10) der Öffnung (7) bewegt wird.

## Revendications

1. Procédé de formation de filets (15) dans une pièce en bois (8) dans lequel une fraise (1) est mue sur au moins un tour le long de la surface intérieure (10) d'une ouverture (7) de la pièce en bois (8) en même temps que la fraise (1) est mue longitudinalement le long de l'ouverture (7) et donne aux filets une forme conique obtenue par :
- la forme de la fraise (1), telle que la fraise (1) comporte un certain nombre de bords de coupe (3) qui sont perpendiculaires à un axe central longitudinal (12) de la fraise à fileter (1) et telle que le diamètre extérieur de chaque bord de coupe (3) est inférieur au diamètre extérieur du bord de coupe (3) placé à la suite de ce dernier ; et
- la mise en mouvement de la fraise à fileter vers l'intérieur ou vers l'extérieur par rapport à un axe central (13) de l'ouverture (7), **caractérisé en ce que** la fraise est une fraise à fileter, et **en ce qu'**un mouvement hélicoïdal lui est imprimé.

2. Procédé selon la revendication 1, dans lequel la fraise à fileter (1) est mue vers le centre de l'ouverture (7) à la fin de son mouvement le long de la surface intérieure de l'ouverture (7), et dans lequel la fraise à fileter (1) est mue après cela vers le haut hors de l'ouverture (7) .

3. Procédé selon la revendication 1 ou la revendication 2, dans lequel l'ouverture (7) est forée en formant une ouverture traversante.

4. Procédé selon l'une quelconque des revendications précédentes, dans lequel la fraise à fileter est mue dans une position inclinée par rapport à l'ouverture (7).

5. Procédé selon l'une quelconque des revendications précédentes, dans lequel la fraise à fileter est mue vers l'intérieur ou vers l'extérieur par rapport à l'axe central (13) de l'ouverture (7) en même temps qu'elle est mue le long de l'ouverture (7).

6. Procédé selon l'une quelconque des revendications précédentes, faisant appel à l'utilisation d'une fraise à fileter (1) comportant une partie inférieure conique (5) dotée de bords de coupe (3).

7. Procédé selon l'une quelconque des revendications précédentes, dans lequel la fraise à fileter (1) n'est mue que sur un tour autour de la surface intérieure (10) de l'ouverture (7).
